# EUROPEAN PATENT SPECIFICATION

(11) **EP 2 562 144 B1**
(45) Date of publication and mention of the grant of the patent: **14.03.2018**
(21) Application number: 12005662.7
(22) Date of filing: 03.08.2012
(51) Int. Cl.: C04B 41/52, C04B 41/89, C04B 41/00, C03C 3/097, C03C 8/08, C04B 111/80

(54) **Procedure for obtaining a metallic effect on ceramic bases by ink injection**
Verfahren zum Erhalten einer metallischen Wirkung auf Keramikbasen durch Tinteneinspritzung
Procédé permettant d'obtenir un effet métallique sur des bases céramiques par injection d'encre

(30) Priority: 22.08.2011 ES 201131405
(43) Date of publication of application: 27.02.2013
(73) Proprietor: Sociedad Anónima Minera Catalano-Aragonesa, 50001 Zaragoza (ES)
(72) Inventor: Caballero López, Miguel Angel, 50001 Zaragoza (ES); Pérez Aparicio, Joaquin Javier, 50001 Zaragoza (ES); Navarrp Soriano, Elena, 50001 Zaragoza (ES)
(74) Representative: Schäfer, Matthias W.

(56) References cited:
- EP-A1- 0 665 192
- EP-A1- 1 921 055
- WO-A1-01/09061
- WO-A1-01/51573
- ES-A1- 2 246 166
- FERRO SPAIN ET AL: "Tintas Ink-Jet para Decoracion 3D", BOLETÍN DE LA SOCIEDAD ESPAÑOLA DE CERÁMICA Y VIDRIO, [Online] vol. 50, no. 2, 1 March 2011 (2011-03-01), pages XXVII-XXX, XP055049746, DOI: 10.3989/cyv.2011.v50.i2.993 Retrieved from the Internet: URL:http://ceramicayvidrio.revistas.csic.e s/index.php/ceramicayvidrio/article/view/9 93/1026> [retrieved on 2013-01-15]

## Description

The present description relates, as its title indicates, to a procedure for obtaining a metallic effect on ceramic bases by ink jet printing, in which the known ceramic glaze formulation to obtain metallised finishes is broken down into two separate components: on the one hand, a glaze with part of the oxides needed to obtain the metallic effect, applying it in the conventional manner on the ceramic base, and on the other, a metallic ink with the other necessary part of the oxides, applying it by ink jet printing over the previous layer, finishing off with a firing process. As a result a decorated ceramic tile with a metallic effect is obtained.

The technique for the digital printing of tiles using ink jet printing machines is increasingly widespread, this being a cost-effective system offering great flexibility of the process. It is commonly used to decorate ceramic tiles by applying ceramic pigments that give the tiles their colour once they have been fired.

There are descriptions of several related procedures, such as, for example, that of Patent ES 2131466 *"Automatic procedure for -decorating ceramic substrates",* describing, in general terms, the use of an ink injection system in ceramics, that of Patent ES 2289916 "*Colloidal dispersion of ceramic pigments",* which presents, in a very general manner, the manufacture of inks to be applied by injection. These procedures and inks only produce different coloured finishes by injection, it not being possible to achieve a metallic finish.

Some advances have been made in the incorporation of metallic particles in inks for injection on ceramic materials, as described, for example, in Patent P201031196 *"Procedure for the production of a metallic suspension for printing ceramic elements",* that provides a technique for adding noble metals to inks to obtain a chromatic range with more intense colours, but it does not allow metallic finishes to be obtained.

Obtaining metallic finishes in ceramics is conventionally linked to the use of special, quite thick glazes, such as that described in patent P200401851 *"Metallic glaze composition",* which creates a metallised base of sufficient thickness, on to which the desired colour decoration can be subsequently applied. This procedure has the drawback that it is first necessary to cover the whole of the tile with the metallic glaze, and then cover it by decorating it with the desired colours, with the consequent waste of materials and resultant higher economic cost. Furthermore, these types of compositions require a great thickness in the metallised areas which makes these compositions unsuitable for injection. Indeed, the fact that a high minimum thickness is needed to obtain the metallic effect is incompatible with injection technology which can only achieve a very thin ink layer, with a maximum of 42 to 80 pl, which is insufficient to obtain a metallic effect.

Metallic effects are chiefly achieved by applying layers of glaze with a weight per area unit of between 0.3 and 0.5 kg/m², either by waterfall application, airbrush or disc. An ink jet printing head enables the supply of a weight of approximately 0.022 kg/m2 of applied solid, which is much less than that required, hence, a priori, it is not considered technically possible to obtain metallic effects on ceramic tiles by ink jet printing.

Document FERRO SPAIN ET AL, "Tintas Ink-Jet para Decoracion 3D", BOLETÍN DE LA SOCIEDAD ESPAÑOLA DE CERÁMICA Y VIDRIO, vol. 50, no. 2, March/April 2011, pages XXVII - XXX, discloses ink-jet inks to be applied as a 3D object and extra-fine layers to protect the decoration made by ink-jet technology. This document acknowledges the limitations of current ink jet technology defined by the maximum amount of ink depositable by the ink-jet printing head. Therefore, it is suggested to provide new ink-jet inks obtained through the development of new frits based on monophasic crystal vitro structures that allow ceramic effects to be obtained.

To solve the problems that currently exist in creating a metallic effect on tiles and other ceramic elements, improving the current state of the art by overcoming the technical problem of the ink thickness required, and in order to provide certain elements that facilitate and improve economic performance and efficacy, a procedure has been developed to obtain a metallic effect on ceramic bases by ink jet printing as defined in claim 1 in which the known ceramic glaze formulation to obtain metallised finishes is broken down into two separate compounds:
On the one hand, a glaze with part of the oxides needed to obtain the metallic effect, applying it in the conventional manner over the ceramic base, and on the other hand, a metallic ink with the other necessary part of the oxides, applying it by ink injection over the previous layer and finishing off with a firing process. As a result a decorated ceramic tile with a metallic effect is obtained.

This procedure affords multiple advantages over those currently available, the most important being that it permits the use of ink jet printing machines to create the metallic effect, with the consequent saving of process time, improvement in productivity and reduction in the economic cost of its manufacture.

Another important advantage of this procedure is that it enables considerable savings of the materials used in the manufacture given that, conventionally, the whole of the base was metallised and then covered with the decoration in the areas required, whilst with this procedure the metallised finish can be applied selectively, in a local manner, only to the areas in which it is necessary, thanks to the fact the same ink jet printing head that is used for the decoration is employed.

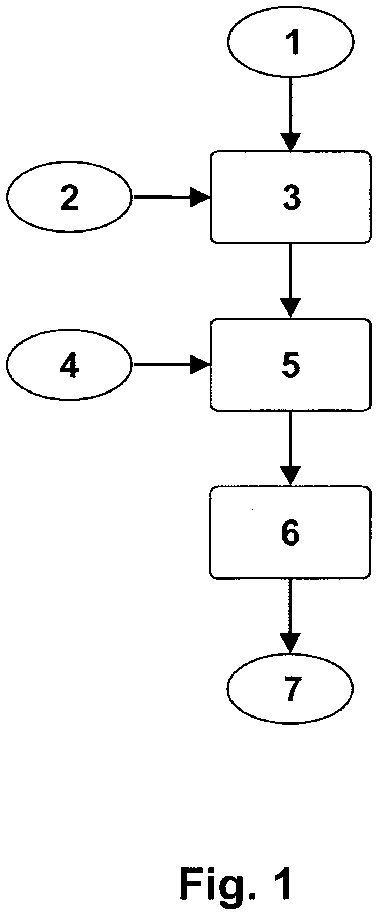

To gain a better understanding of the object of the present invention figure -1- of the attached drawing shows a simplified block diagram of the process of obtaining the metallic effect on ceramic bases by injection.

The procedure for obtaining the metallic effect on ceramic bases by ink jet printing, which is the object of the present invention, basically comprises, as can be observed in the drawing attached, the separate use of a glaze (2) with part of the oxides needed to obtain the metallic effect, including Si and Al, and a metallic ink (4) with the necessary part of the oxides, including Fe as the majority element.

This separate use is carried out by means of a first phase of application (3) of the glaze (2) on a ceramic base (1), followed by a second phase of ink jet printing (5) of the metallic ink (4) on the layer previously deposited on the ceramic base (1), completed by a third phase of firing (6).

The application phase (3) of the glaze (2) on a ceramic base (1) is carried out by means of a process chosen from amongst the group of: bell, airbrush, rotary, disc or waterfall.

The ink jet printing phase (5) of the metallic ink (4) is preferably carried out using an ink jet printing head capable of providing a thickness of between 6 and 200 pl per drop.

The firing phase (6) is carried out by means of a normal ceramic cycle, from the traditional double firing at 900°C to high-temperature porcelain stoneware firing at 1300°C, with firing cycles of preferably between 0.5 and 24 h.

The metallic ink (4) is formulated by selecting only some of the oxides needed to obtain the metallic effect, since the technique of ink jet printing only allows a very light weight to be applied. Depending on the type of metallic ink (4) chosen, glaze formulations will be used that provide the rest of the oxides.
**A** - In a preferred embodiment of the invention, the metallic ink (4) is formed mainly by iron Fe inks in which an iron oxide raw material is used to provide the Fe in the metallic ink (4). This iron oxide raw material can be chosen from amongst iron salts or oxides, preferably haematite Fe₂O₃, black iron oxide FeO or magnetite Fe₃O₄. A particularly interesting use occurs when a ferrofluid is used as an ink, which is a suspension of nanoparticles of iron oxides of an average size of around 10 nm. The corresponding glaze (2) is formulated using, as essential elements, Si, Al, P and Li oxides to which other optional oxides of Na, K, Mg, Ca can be incorporated, an example not forming part of the present invention is given according to the composition:

| | |
|---|---|
| SiO₂ | 40 - 60% |
| Al₂O₃ | 10 - 30% |
| P₂O₅ | 10 - 30% |
| R₂O + RO | 5 - 15% |
| ZrO₂ + TiO₂ | 0 - 10% |
| B₂O₃ | 0 - 10% |

Where:
R₂O: Li₂O + Na₂O + K₂O
RO: MgO + CaO + SrO + BaO

**B** - In an alternative embodiment of the invention, the metallic ink (4) is formed mainly by Fe and P oxide pigment inks, as the main oxides, said oxides being within the ranges of:

| | |
|---|---|
| P₂O₅ | 40 - 70% |
| Fe₂O₃ | 10 - 50% |

Furthermore, the glaze is formulated using, as essential elements, Si, Al, and Li oxides to which other optional oxides of Na, K, Mg, Ca can be incorporated, an example not forming part of the present invention is given according to the composition:

| | |
|---|---|
| SiO₂ | 40 - 60% |
| Al₂O₃ | 10 - 30% |
| R₂O + RO | 5 - 20% |
| ZrO₂ + TiO₂ | 0 - 10% |
| B₂O₃ | 0 - 10% |

Where:
R₂O: Li₂O + Na₂O + K₂O
RO: MgO + CaO + SrO + BaO

**C -** In a second alternative embodiment of the invention, the metallic ink (4) is formed mainly by Fe, P and Li oxide pigment inks, as essential elements, according to the composition:

| | |
|---|---|
| P₂O₅ | 40 - 70% |
| Fe₂O₃ | 10 - 50% |
| Li₂O | 0 - 30% |

The glaze, for its part, is formulated using Si and Al oxides as essential elements, to which other optional oxides of Li, Na, K, Mg, Ca, can be incorporated, an example not forming part of the present invention is given according to the composition

| | |
|---|---|
| SiO₂ | 40 - 60% |
| Al₂O₃ | 10 - 30% |
| R₂O + RO | 5 - 30% |
| ZrO₂ + TiO₂ | 0 - 10% |
| B₂O₃ | 0 - 10% |

Where:
R₂O: Li₂O + Na₂O + K₂O
RO: MgO + CaO + SrO + BaO

These possible combinations of metallic ink (4) and glaze (2) can be summarised in the following table:

| **OPTION** | **METALLIC INK (4)** | **GLAZE (2)** |
|---|---|---|
| **A** | Fe compounds (oxides or salts) | Glazing of essential P - Si - Al - Li oxides |
| **B** | Fe- P oxide pigment | Glazing of essential Si - Al - Li oxides |
| **C** | Fe - P - Li oxide pigment | Glazing of essential Si - Al oxides |

As a result a ceramic tile is obtained with a metallic effect decoration that can be measured using colorimetric techniques such as goniospectrophotometry.

Given that the special ceramic glaze (2), due to its composition and in itself, is white and has a matt or gloss finish, other decorating techniques which do not form part of the present invention can be incorporated to improve the final finish of the piece, such as pigmented inks or by colouring the glaze (2) with ceramic pigments, without interfering in the reaction that occurs between the glaze (2) and the overlaid metallic ink (4) that produces the metallic effect. Furthermore, depending on the type of metallic ink (4) and glaze (2) used, the metallic effect finishes is matt or gloss.

As an example of the application of this procedure, by way of an experiment, a water suspension of a glaze not forming part of the present invention was prepared, in line with the following composition:

| | |
|---|---|
| SiO₂ | 54.4% |
| ZrO₂ | 3.3% |
| P₂O₅ | 16.1% |
| Al₂O₃ | 19.1% |
| Li₂O | 1.6% |
| Na₂O | 2.7% |
| K₂O | 0.9% |
| MgO | 1.2% |
| CaO | 0.2% |

This suspension was used to glaze ceramic porcelain stoneware body tiles with a coating thickness of 300 g/m².

Two metallic inks were also prepared:

### INK 1

| | |
|---|---|
| Glycol-based carrier for inks: | 60% |
| Micronized magnetite (Fe₃O₄): | 40% |

Once the magnetite had been dispersed in the glycol-based carrier, it was milled in a horizontal microball mill to obtain an ink suspension with a grain size with D₉₉ heat of less than 700 nm.

### INK 2

Ferrofluid with a concentration of 30% magnetite, with an average size of 10 nm dispersed in octane.

Finally these inks were used to decorate the glazed tiles, using a ceramic printer equipped with an XAAR1001 head, capable of printing drop sizes of between 6 y 42 pl.

Once the ceramic tiles had been decorated, they were fired at a temperature of 1200°C in a conventional ceramic roller kiln with a firing cycle of 60'.

As a result, in both cases, ceramic tiles were obtained in which a clear metallic effect could be observed with a drop size of 30 pl onwards.

## Claims

1. Procedure for obtaining a metallic effect on ceramic bases by ink jet printing, of the type used in the manufacture of tiles and other ceramic items, **characterized in that** it uses, separately, a glaze (2) with part of the oxides needed to obtain the metallic effect, including Si and Al, and a metallic ink (4) with the other part of the oxides required, the metallic ink (4) consisting essentially of iron compounds being oxides or salts and combined with a glaze (2) consisting of P - Si - Al - Li oxides and optionally oxides of Na, K, Mg, Ca, or the metallic ink (4) consisting essentially of Fe - P oxide pigments and combined with a glaze (2) consisting of Si - Al - Li oxides and optionally oxides of Na, K, Mg, Ca, or the metallic ink (4) consisting essentially of Fe - P - Li oxide pigments and combined with a glaze (2) consisting of Si - Al oxides and optionally oxides of Li, Na, K, Mg, Ca, the procedure comprising carrying out a first phase of application (3) of the glaze (2) on a ceramic base (1), wherein the glaze (2) is white and has a matt or gloss finish, continuing with a second phase of ink jet printing (5) of the metallic ink (4) on the coat previously deposited on the ceramic base (1) and causing a reaction between the glaze (2) and the overlaid metallic ink (4) that produces the metallic effect, finishing off with a third phase of firing (6).

2. Procedure for obtaining a metallic effect on ceramic bases by ink jet printing, according to claim 1, wherein the raw material of iron oxide, which is used mainly to provide the Fe in the metallic ink (4), is selected from the group: haematite Fe₂O₃, black iron oxide FeO, magnetite Fe₃O₄.

3. Procedure for obtaining a metallic effect on ceramic bases by ink jet printing, according to claim 2, wherein the raw material of iron oxide that is used mainly to provide the Fe in the metallic ink (4) is in the form of a suspension of nanoparticles of iron oxides or ferrofluid.

4. Procedure for obtaining a metallic effect on ceramic bases by ink jet printing, according to any of the preceding claims, wherein the glaze (2) incorporates, in the form of oxides, elements selected from the group formed by Na, K, Mg, Ca.

5. Procedure for obtaining a metallic effect on ceramic bases by ink jet printing, according to claim 1, wherein the phase of application (3) of the glaze (2) on a ceramic base (1) is carried out by means of a process chosen from amongst the group formed by: bell, airbrush, rotary, disc or waterfall.

6. Procedure for obtaining a metallic effect on ceramic bases by ink jet printing, according to claim 1, wherein the phase of ink jet printing (5) of the metallic ink (4) is performed using an injection head capable of providing a thickness of between 6 x 10³ µm³ and 200 x 10³ µm³ per drop.

7. Procedure for obtaining a metallic effect on ceramic bases by ink jet printing, according to claim 1, wherein the firing phase (6) is carried out at temperatures of between 900 and 1300°C, in firing cycles of between 0.5 and 24 h.

## Patentansprüche

1. Verfahren zum Erzielen eines metallischen Effekts auf Keramikgrundstoffen durch Tintenstrahldrucken, wie es bei der Herstellung von Fliesen und anderen keramischen Gegenständen verwendet wird, **dadurch gekennzeichnet, dass** es gesondert eine Glasur (2) mit einem Teil der erforderlichen Oxide, um den metallischen Effekt zu erzielen, einschließlich Si und Al und eine metallische Tinte (4) mit dem anderen Teil der erforderlichen Oxide verwendet, wobei die metallische Tinte (4) im Wesentlichen aus Eisenverbindungen besteht, welche Oxide und Salze sind, und mit einer Glasur (2) kombiniert wird, welche aus P - Si - Al - Li Oxiden und optional Oxiden von Na, K Mg, Ca besteht, oder wobei die metallische Tinte (4) im Wesentlichen aus Fe-P Oxidpigmenten bestehet und mit einer Glasur (2) kombiniert wird, welche aus Si-Al-Li Oxiden und optional aus Oxiden von Li, Na, K, Mg, Ca besteht, oder wobei die metallische Tinte (4) im Wesentlichen aus Fe - P - Li Oxidpigmenten besteht und mit einer Glasur (2) kombiniert wird, welche aus Si - Al Oxiden und optional Oxiden von Li, Na; K, Mg, Ca besteht, wobei das Verfahren Durchführen einer ersten Phase des Aufbringens (3) der Glasur (2) auf einem Keramikgrundstoff (1) aufweist, wobei die Glasur (2) weiß ist und eine matte oder hochglänzende Oberfläche aufweist, fortfahrend mit einer zweiten Phase des Tintenstrahldruckens (5) der metallischen Tinte (4) auf der zuvor auf dem Keramikgrundstoff (1) aufgetragenen Schicht und Herbeiführen einer Reaktion zwischen der Glasur (2) und der überlagerten metallischen Tinte (4), welche den metallischen Effekt erzeugt, und Abschließen mit einer dritten Phase des Brennens (6).

2. Verfahren zum Erzielen eines metallischen Effekts auf Keramikgrundstoffen durch Tintenstrahldrucken nach Anspruch 1, wobei das Rohmaterial von Eisenoxid, welches hauptsächlich verwendet wird, um das Fe in der metallischen Tinte (4) bereitzustellen, ausgewählt wird aus der Gruppe: Hämatit Fe₂0₃, schwarzes Eisenoxid FeO, Magnetit Fe₃0₄.

3. Verfahren zum Erzielen eines metallischen Effekts auf Keramikgrundstoffen durch Tintenstrahldrucken nach Anspruch 2, wobei das Rohmaterial von Eisenoxid, welches hauptsächlich verwendet wird, um das Fe in der metallischen Tinte (4) bereitzustellen, in der Form einer Suspension von Nanopartikeln von Eisenoxiden oder Ferrofluid vorliegt.

4. Verfahren zum Erzielen eines metallischen Effekts auf Keramikgrundstoffen durch Tintenstrahldrucken nach einem der vorhergehenden Ansprüche, wobei die Glasur (2) in Form von Oxiden Elemente enthält, welche aus der Gruppe ausgewählt werden, die von Na, K, Mg, Ca gebildet wird.

5. Verfahren zum Erzielen eines metallischen Effekts auf Keramikgrundstoffen durch Tintenstrahldrucken nach Anspruch 1, wobei die Phase zum Aufbringen (3) der Glasur (2) auf einem Keramikgrundstoff (1) mittels eines Verfahrens durchgeführt wird, welches aus der Gruppe ausgewählt wird, die gebildet wird von: Tauchglocke, Airbrush, Drehscheibe oder Wasserfall.

6. Verfahren zum Erzielen eines metallischen Effekts auf Keramikgrundstoffen durch Tintenstrahldrucken nach Anspruch 1, wobei die Phase zum Tintenstrahldrucken (5) der metallischen Tinte (4) unter Verwendung eines Einspritzkopfes durchgeführt wird, welcher in der Lage ist, eine Dicke von zwischen 6 x 10³ µm³ und 200 x 10³ µm³ pro Tropfen bereitzustellen.

7. Verfahren zum Erzielen eines metallischen Effekts auf Keramikgrundstoffen durch Tintenstrahldrucken nach Anspruch 1, wobei die Brennphase (6) unter Temperaturen von zwischen 900 und 1300°C bei Brennzyklen von zwischen 0,5 und 24 h durchgeführt wird.

## Revendications

1. Procédé permettant d'obtenir un effet métallique sur des bases céramiques par impression par jet d'encre, du type de ceux utilisés dans la production de carrelage et autres articles en céramique, **caractérisé en ce qu'**il utilise, séparément, un émail (2) avec une partie des oxydes nécessaires pour obtenir l'effet métallique, y compris Si et Al, et une encre métallique (4) avec l'autre partie des oxydes nécessaires, l'encre métallique (4) se composant essentiellement de composés de fer étant des oxydes ou des sels et combinés avec un émail (2) constitué d'oxydes de P - Si - Al - Li et, en option, d'oxydes de Na, K, Mg, Ca, ou l'encre métallique (4) se composant essentiellement de pigments d'oxyde de Fe - P et combinés avec un émail (2) constitué d'oxydes de Si - Al- Li et en option, d'oxydes de Na, K, Mg, Ca, ou l'encre métallique (4) se composant essentiellement de pigments d'oxyde de Fe - P - Li et combinés avec un émail (2) constitué d'oxydes de Si - Al et en option, d'oxydes de Li, Na, K, Mg, Ca, le procédé comprenant la réalisation d'une première phase d'application (3) de l'émail (2) sur une base céramique (1), étant précisé que l'émail (2) est blanc et présente une finition matte ou brillante, suivie d'une seconde phase d'impression par jet d'encre (5) de l'encre métallique (4) sur la couche précédemment appliquée sur la base céramique (1) et entraînant une réaction entre l'émail (2) et l'encre métallique (4) le recouvrant, produisant ainsi l'effet métallique, et suivie d'une troisième phase de cuisson (6).

2. Procédé permettant d'obtenir un effet métallique sur des bases céramiques par impression par jet d'encre selon la Revendication 1, étant précisé que la matière première de l'oxyde de fer, qui est utilisé principalement pour fournir le Fe à l'encre métallique (4), est sélectionnée parmi le groupe composé de : hématite Fe₂O₃, oxyde de fer noir FeO, magnétite Fe₃O₄.

3. Procédé permettant d'obtenir un effet métallique sur des bases céramiques par impression par jet d'encre selon la Revendication 2, étant précisé que la matière première de l'oxyde de fer, qui est utilisé principalement pour fournir le Fe à l'encre métallique (4) présente la forme d'une suspension de nanoparticules d'oxydes de fer ou de ferrofluide.

4. Procédé permettant d'obtenir un effet métallique sur des bases céramiques par impression par jet d'encre selon l'une quelconque des Revendications précédentes, étant précisé que l'émail (2) contient des éléments sélectionnés parmi le groupe Na, K, Mg, Ca, sous forme d'oxydes.

5. Procédé permettant d'obtenir un effet métallique sur des bases céramiques par impression par jet d'encre selon la Revendication 1, étant précisé que la phase d'application (3) de l'émail (2) sur une base céramique (1) est réalisée au moyen d'un processus sélectionné parmi le groupe composé de : cloche, aérographie, rotation, disque ou cascade.

6. Procédé permettant d'obtenir un effet métallique sur des bases céramiques par impression par jet d'encre selon la Revendication 1, étant précisé que la phase d'impression par jet d'encre (5) de l'encre métallique (4) est réalisée en utilisant une tête d'injection capable de produire une épaisseur entre 6 x 10³ µm³ et 200 x 10³ µm³ par goutte.

7. Procédé permettant d'obtenir un effet métallique sur des bases céramiques par impression par jet d'encre selon la Revendication 1, étant précisé que la phase de cuisson (6) est réalisée à une température entre 900 et 1 300°C, avec des cycles de cuisson d'une durée comprise entre 0,5 et 24 h.
